# EUROPEAN PATENT SPECIFICATION

(11) **EP 1 803 311 B1**
(45) Date of publication and mention of the grant of the patent: **11.02.2009**
(21) Application number: 04769704.0
(22) Date of filing: 22.10.2004
(51) Int. Cl.: H04W 8/18

(54) **CONTROLLING A USE OF AUTOMATED CONTENT**
REGELN DER BENUTZUNG VON AUTOMATISIERTEM INHALT
CONTROLE DE L'UTILISATION D'UN CONTENU AUTOMATISE

(43) Date of publication of application: 04.07.2007
(73) Proprietor: Nokia Corporation, 02150 Espoo (FI)
(72) Inventor: VATAJA, Timo, FIN-33210 Tampere (FI)
(74) Representative: Cohausz & Florack
(86) International application number: PCT/IB2004/003471
(87) International publication number: WO 2006/043126

(56) References cited:
- EP-A- 0 685 972
- WO-A-03/017077
- US-A1- 2004 005 876
- US-A1- 2004 205 333
- TRIMECHE M ET AL: "Digital rights management for visual content in mobile applications" CONTROL, COMMUNICATIONS AND SIGNAL PROCESSING, 2004. FIRST INTERNATIONAL SYMPOSIUM ON HAMMAMET, TUNISIA MARCH 21-24, 2004, PISCATAWAY, NJ, USA,IEEE, 21 March 2004 (2004-03-21), pages 95-98, XP010705869 ISBN: 0-7803-8379-6

## Description

### FIELD OF THE INVENTION

The invention relates to methods for controlling a use of automated content at a wireless communication terminal, which wireless communication terminal is able to access a wireless communication network. The invention relates equally to corresponding processing modules, a corresponding network element of a wireless communication network, a corresponding wireless communication terminal, corresponding software codes and software program products and a corresponding wireless communication system.

### BACKGROUND OF THE INVENTION

Wireless communication terminals generally comprise some kind of automated content. Automated content is content which is used in the terminal in an automatic way. An automated content may be for instance a ringing tone, which is played automatically in case of an incoming call, a background image which is presented automatically when the terminal is in an active state, a skin or theme which is applied automatically to a menu, etc.

Typically, a user of a wireless communication terminal is enabled to download a desired content to the terminal, to store the content in the terminal in form of a data file, and to select this content for use as an automated content, if desired.

Some content, which can be used as an automated content is protected by a digital right management (DRM). Such DRM protected content is offered for instance by operators of wireless communication networks or by content providers for a charge. Measures are taken that such DRM protected content cannot be freely duplicated.

Other content that can be used as an automated content, however, is not DRM protected. Such content can often be downloaded for free into the wireless communication terminal, for example in form of MP3, MIDI or gif files via the Internet.

As a result, less and less users buy content from network operators or content providers.

In order to ensure that only DRM protected content can be selected as an automated content, the manufacturers of the wireless communication terminals could hard-code this requirement into the software of the terminals.

This would be a rather inflexible approach, though.

Mejdi Trimeche and Fehmi Chebil present in "Digital Rights Management For Visual Content In Mobile Applications" a scheme that utilizes watermarking as complementary solution for DRM on mobile devices and show how it could enhance the security of copyrighted media distribution.

U.S. patent application 2004/0205333 Al presents a method and system for providing DRM-protected electronic content to user equipment whose operation is at least in part supported by a platform. When the content is received at a rendering server within the platform, the rendering server requests validation of usage rights associated with the content from a platform DRM module. The DRM module determines whether a DRM content type of the content is associated with a support module in an application domain and, if so, supplies the validation request to the associated support module via an interface with the support module. Otherwise, the validation request is processed at the DRM module. In either case, the content is rendered at the rendering server and made available to the user equipment according to a response to the validation request. The DRM functionality of the support module can be changed by third parties.

### SUMMARY OF THE INVENTION

It is an object of the invention to enable a flexible control of the use of automated content in a wireless communication terminal.

For a network side, a method is proposed for controlling a use of automated content at a wireless communication terminal, which wireless communication terminal is able to access a wireless communication network. The method comprises at the wireless communication network detecting whether a wireless communication terminal is newly accessing the wireless communication network. Further, the method comprises transmitting an indication to the wireless communication terminal indicating whether the wireless communication network allows the wireless communication terminal to use exclusively automated content, which is protected by a digital rights management, in case such an access is detected.

For a network side, moreover a processing module for a network element of a wireless communication network is proposed. The wireless communication network can be accessed by a wireless communication terminal. The processing module is adapted to receive information that a wireless communication terminal is newly accessing the communication network and to cause, in the case of reception of such information, a transmission of an indication to the wireless communication terminal indicating whether the wireless communication network allows the wireless communication terminal to use exclusively automated content, which is protected by a digital rights management.

For a network side, moreover a network element for a wireless communication network is proposed, which comprises the proposed processing module for a network element.

For a network side, moreover an automated content control software code for controlling a use of automated content at a wireless communication terminal is proposed. The wireless communication terminal is able to access a wireless communication network. When running in a processing module of a network element of the wireless communication network, the automated content control software code realizes the method presented for the network side.

For a network side, finally a software program product is proposed which stores the proposed automated content control software code.

For a terminal side, as well a method is proposed for controlling a use of automated content at a wireless communication terminal, which wireless communication terminal is able to access a wireless communication network. This method comprises at the wireless communication terminal receiving from the wireless communication network an indication indicating whether the communication network allows the wireless communication terminal to use exclusively automated content, which is protected by a digital rights management. The method further comprises storing the indication in storage to enable the wireless communication terminal to control a use of automated content according to the indication.

For a terminal side, moreover a processing module for a wireless communication terminal, which is able to access a wireless communication network, is proposed. The processing module is adapted to receive from the wireless communication network an indication indicating whether the wireless communication network allows the wireless communication terminal to use exclusively automated content, which is protected by a digital rights management. The processing module is further adapted to store a received indication indicating whether the wireless communication network allows the wireless communication terminal to use exclusively automated content which is protected by a digital rights management in a storage of the wireless communication terminal to enable said device (10) to control a use of automated content according to said indication.

For a terminal side, moreover a wireless communication terminal is proposed, which is able to access a wireless communication network and which comprises the proposed processing module for a wireless communication terminal.

For a terminal side, moreover a digital rights management software code is proposed for controlling a use of automated content at a wireless communication terminal. The wireless communication terminal is able to access a wireless communication network. When running in a processing module of the wireless communication terminal, the automated content control software code realizes the method presented for the terminal side.

For a terminal side, further a software program product is proposed which stores the proposed digital rights management software code.

Finally, a wireless communication system is proposed, which comprises at least one proposed network element and at least one proposed wireless communication terminal.

The invention proceeds from the consideration that the operator of a wireless communication network could be enabled to define whether only DRM protected content shall be selected by a user of a wireless communication terminal as an automated content. It is therefore proposed that a wireless communication network, which detects a roaming wireless communication terminal, transmits a corresponding indication to the wireless communication terminal. The wireless communication terminal receives and stores this indication as a basis for deciding on later content selections by a user.

It is an advantage of the invention that it allows network operators to control their content business by dynamically enabling or disabling the use of free content as an automated content. The same terminal may thus be granted different rights by different networks it accesses. The control does not even have to be uniform for all terminals accessing a single network. It could also be made dependent, for example, on the contract of a user of the respective terminal.

It is further an advantage of the invention that a hard-coded solution by the terminal manufacturers can be avoided. In addition to the achieved flexibility, this implies that it is not necessary to adapt the wireless communication terminals in the manufacturing phase to specific operators, which reduces the costs of the wireless communication terminals.

The controlled automated content may comprise any type of automated content, for instance a ringing tone, a background image, a wallpaper and a skin, etc., or a combination of two or more of them in form of a theme.

The indication transmitted by the network and received at a terminal may be a dedicated signal or be included as a parameter in an existing signal. The indication may be for instance simply a flag, which is set or not.

The indication does not have to indicate necessarily for all possible types of automated content that only DRM protected content is allowed to be used. It may also indicate only for selected types of automated content that only DRM protected content is allowed to be used.

Further, separate indications might be provided for different types of automated content. In this case, the control is particularly flexible.

It is to be understood that if the network does not wish to prevent the use of free automated content, it can either transmit a corresponding indication, which is then stored by the terminal as well, or not transmit any indication at all.

In order to ensure in the latter case that the user of the terminal may select free content as well as an automated content when changing from a network, which allows only the use of DRM protected content, further measures should be provided at the terminal.

In one embodiment of the invention, a terminal detecting that it is accessing a new wireless communication network first stores an indication in the storage indicating that the accessed wireless communication network allows using any kind of automated content. Thereby, it is ensured that also free content can be selected as an automated content, if the currently accessed network does not provide any indication.

The storage in the terminal is advantageously protected from unauthorized accesses. It may be a secure place of the terminal, at which the user of the terminal cannot easily tamper or change any stored information. This can be achieved for example by realizing the access to the storage via a manufacturer specific operating system.

Once the indication is stored, it may be used in the terminal as a basis for deciding about content selections by a user.

One embodiment of the invention is provided for the case that a user of the wireless communication terminal selects content for use as an automated content. In this embodiment, a use of the content as an automated content is prevented, if the content is determined not to be DRM protected and the indication stored in the storage indicates that the wireless communication network allows the wireless communication terminal to use exclusively DRM protected automated content.

In a further embodiment of the invention, a user of the wireless communication terminal is informed in case a requested use of a selected content as an automated content is prevented.

The invention can be used in any type of wireless communication system, for instance for a cellular communication system and/or a wireless local area network (WLAN) based communication system.

### BRIEF DESCRIPTION OF THE FIGURES

Other objects and features of the present invention will become apparent from the following detailed description considered in conjunction with the accompanying drawings.
- Fig. 1: is a schematic block diagram of a communication system station according to an embodiment of the invention;
- Fig. 2: is a flow chart illustrating an operation in the system of Figure 1; and
- Fig. 3: is a flow chart illustrating an operation in a mobile terminal of the system of Figure 1.

### DETAILED DESCRIPTION OF THE INVENTION

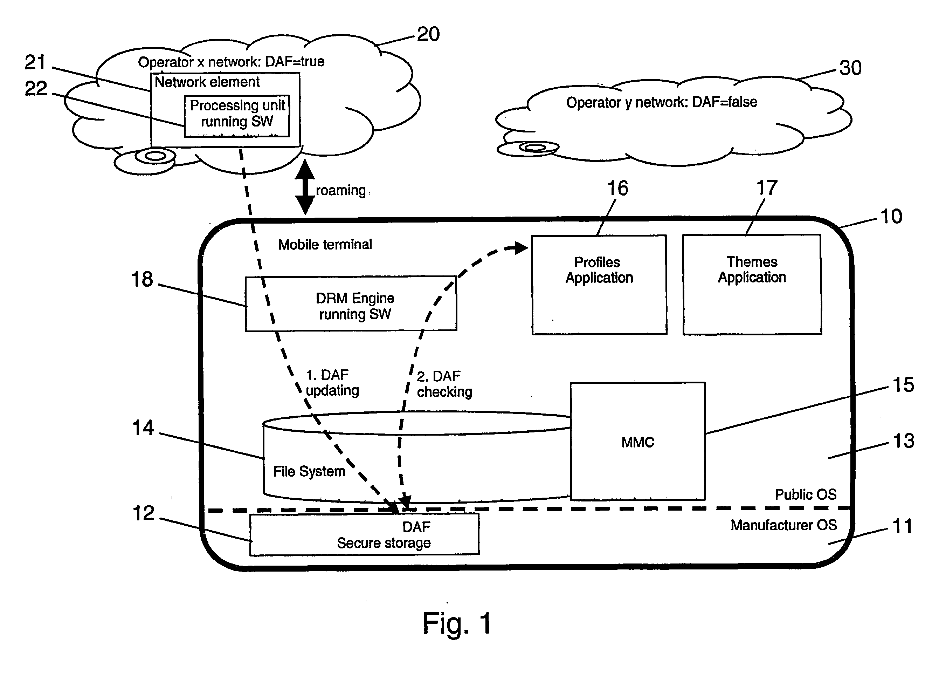

Figure 1 is a schematic block diagram of a communication system according to an embodiment of the invention, which enables a flexible handling of automated content.

The system comprises a wireless communication terminal 10 and a network element 21 of a wireless communication network 20 operated by a first operator x. In addition, a further wireless communication network 30 operated by a second operator y is indicated. The wireless communication networks 20, 30 are assumed by way of example to be mobile communication networks and the wireless communication terminal 10 is assumed by way of example to be a mobile terminal, like a mobile phone.

The operator x of network 20 sells DRM protected content and is therefore interested in that mobile terminals accessing the network 20 are only able to use DRM protected content as an automated content. The network element 21 of the communication network comprises a processing unit 22. The processing unit 22 forms a processing module for a network element according to an embodiment of the invention and runs automated content control software according to an embodiment of the invention.

The operator y of network 30 is not interested in preventing mobile terminals, which are accessing the network 30, from using also free content as an automated content.

The mobile terminal 10 comprises a first portion 11, which is based on a manufacturer specific operating system OS. This portion 11 includes a secure storage 12 storing a DRM automated flag DAF, which can be set to "true" or "false". It is to be understood that the operating system for this first portion 11 is not required to be manufacturer specific as in the presented exemplary embodiment; it only has to ensure that the first portion 11 is a safe storing place. That is, it has to be efficiently prevented that the end-user can change the value of the flag and that any user-installed application can override or manipulate the flag.

The mobile terminal 10 further comprises a second portion 13, which is based on a public operating system OS, like SymbianOS.

The second portion 13 includes a file system 14 managing the access to a general memory of the mobile terminal 10. In addition, the file system 14 enables the access to the secure storage 12 and to a multimedia card MMC 15 which may be connected to the mobile terminal 10. Such a MMC 15 may store any type of content, including DRM protected content. It is to be understood that instead of the multimedia card 15, a Secure Digital (SD) memory card or any other removable memory card could be utilized as well for storing the content. Further, the content could also be stored in a memory of the mobile terminal itself, not to memory card.

The second portion 13 moreover includes a profiles application 16 and a themes application 17. The profiles application 16 and the themes 17 application both enable a user to select an automated content, which is to be used via a user interface (not shown). The profiles application 16 enables a separate selection of automated content for a respective single type of use, for instance for a default ringing tone or for a background image. The themes application 17 enables a selection of a comprehensive automated content which is associated to a specific theme, combining for instance files for a ringing tone, for a background image, for switching on and off animation, etc.

The second portion 13 moreover includes a DRM engine 18. The DRM engine 18 forms a processing module according to an embodiment of the invention. Digital rights management software according to an embodiment of the invention run by the DRM engine 18 realizes the functions of the DRM engine 18. Only the DRM engine 18 is able to access the secure storage 13 via the file system 14 and to allow or reject setting a particular stored content as an automated content.

It is to be understood that the mobile terminal 10 comprises a plurality of further components which are not depicted in Figure 1, but which are known to be used in mobile terminals.

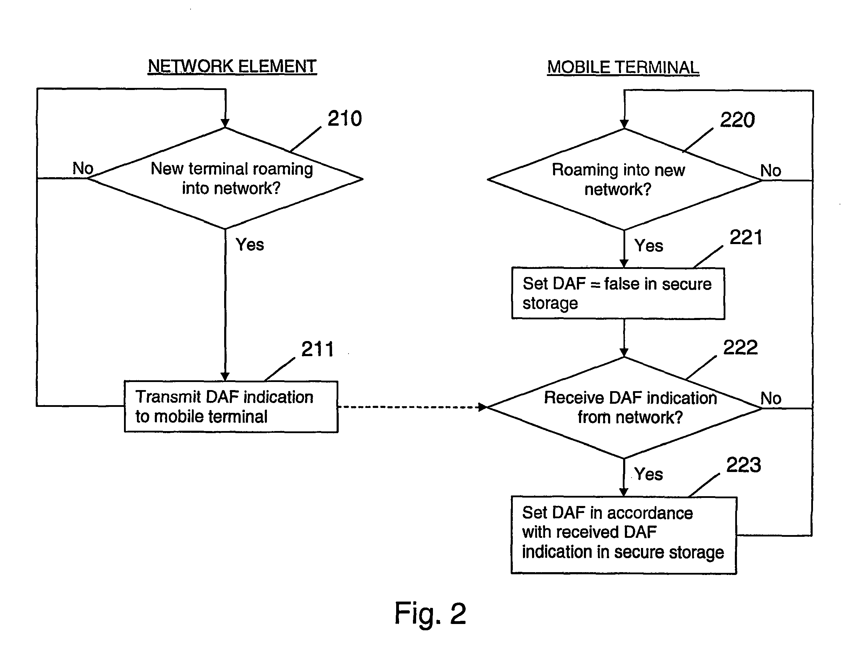

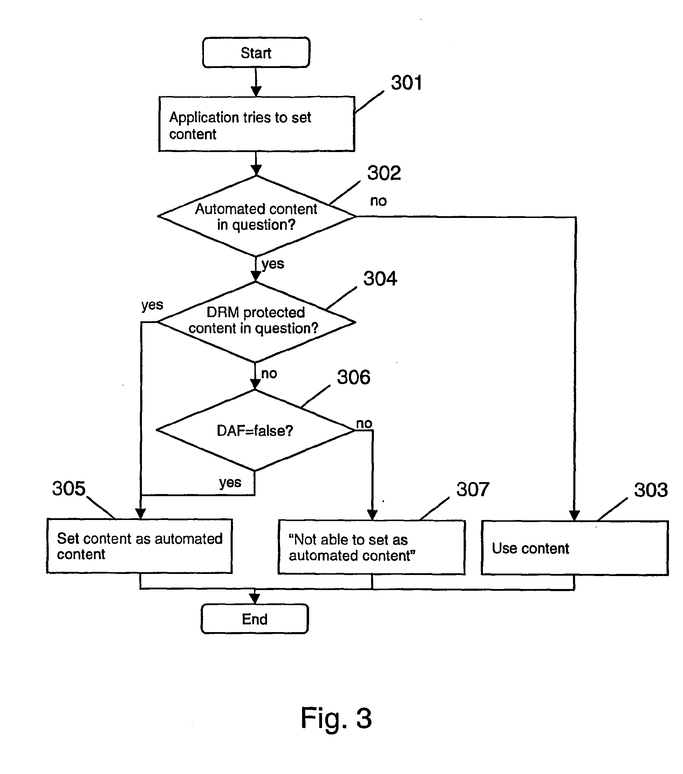

An operation in the system will now be described with reference to Figures 2 and 3.

Figure 2 is a flow chart illustrating the flexible control of the automated content handling by a network operator.

As a starting point, the mobile terminal 10 is assumed to be accessing a specific network, for example the network 30 of operator y. If the operator of this network allows mobile terminals using only DRM protected automated content, the DAF in the secure storage 12 of the mobile terminal 10 is set to "true". Otherwise, the DAF in the secure storage 12 is set to "false", as in the case of an access to the network 30 of operator y.

The DRM engine 18 of the mobile terminal 10 monitors whether the mobile terminal 10 is roaming into another network or the DRM engine receives the information considering roaming into another network from some other software or hardware component (step 220).

If the DRM engine 18 detects that the mobile terminal 10 is roaming into another network, for instance the network 20 of operator x, it sets the DAF in the secure storage 12 to "false" (step 220).

In parallel, the network 20 of operator x registers that a new mobile terminal 10 is accessing the network 20. This information is provided to the processing unit 22 of network element 21 of the network 20. The network element 21 can be for example the base station via which the mobile terminal 10 accesses the network 20 or a network element associated to this base station.

When the automated content control software run by the processing unit 22 receives information that a new mobile terminal 10 is roaming into the network 20 (step 210), it may cause a transmission of an indication for a DAF setting to the mobile terminal 10 (step 211).

Since the operator x of network 20 wants to prevent mobile terminals from using free automated content, the provided indication defines that the DAF in the secure storage 12 of the mobile terminal 10 has to be set to "true". Otherwise, no DAF related indication would have to be transmitted, or an indication that the DAF in the secure storage 12 can be set to "false". The operator x of the network 20 might also differentiate between different mobile terminals, for instance depending on the contract of their users, and allow only some of them using free automated content.

The DRM engine 18 monitors in the meantime whether the mobile terminal 10 receives an indication for updating the DAF from the new network 20 (step 222).

If the DRM engine 18 detects an indication that the DAF has to be set to "true", the DRM engine 18 changes the setting of the DAF in the secure storage 12 accordingly (223) .

As long as no such indication is received, either because the operator of the new network does not support a DAF setting or because the operator of the new network consents using any type of content as an automated content, the DRM engine 18 does not change the setting of the DAF. Thus, the DAF remains set to "false" by default.

Figure 3 is a flow chart illustrating the use of the DAF setting in the secure storage 12 by the mobile terminal 10.

A user of the mobile terminal 10 may try to set a content stored in the MMC 15 by means of the profiles application 16 via a user interface. A user may select for example a specific tone, for which a data file is stored, either for listening to it right away or for use as an automated content for a default ringing tone.

The DRM engine 18 is informed whenever a user tries to set any stored content (step 301).

Thereupon, the DRM engine 18 checks at first whether the selected content is to be set as an automated content (step 302). If this is not the case, for instance because a tone is simply to be played-back, the content is allowed to be used, for instance to be played with a player of the mobile terminal 10 (step 303).

If the DRM engine 18 determines in contrast that the selected content is to be used as an automated content, for instance because it is to be used for a default ringing tone, the DRM engine 18 checks further whether the selected content is DRM protected (304).

In case the selected content is determined to be DRM protected, the DRM engine 18 allows the profiles application 16 setting the content as an automated content (305). Otherwise, the DRM engine 18 checks in addition the current setting of the DAF in the secure storage 12 (step 306).

If the DAF is set to "false" in the secure storage 12, this indicates that the operator of the network to which the mobile terminal 10 is currently connected is not interested in preventing the use of non-DRM protected automated content. The DRM engine 18 thus allows the profiles application 16 setting the selected content as an automated content, even though it is not DRM protected content (step 305).

If, in contrast, the DAF is set to "true" in the secure storage 12, this indicates that the operator x of the network 20 to which the mobile terminal 10 is currently connected desires to prevent the use of non-DRM protected automated content. The DRM engine 18 does therefore not enable the profiles application 16 to set the selected content as an automated content. Instead, the DRM engine 18 causes an output via a user interface informing the user that the selected setting is not possible. This may be for example a text output on a display "Not able to set free content into default ringing tone" (step 307).

It is to be understood that the themes application 17 can be controlled in the same manner as described for the profiles application 16. Further, any other application, which enables a user to select automated content, can be controlled in the same manner as described for the profiles application 16.

It is further to be noted that the described embodiment can be varied in many ways and that it moreover constitutes only one of a variety of possible embodiments of the invention.

## Claims

1. Method for controlling a use of automated content at a wireless communication terminal (10), which wireless communication terminal (10) is able to access a wireless communication network (20), said method **characterized in that** it comprises, at said wireless communication network (20), the steps of :
- detecting whether a wireless communication terminal (10) is newly accessing said wireless communication network (20); and
- in case such an access is detected, transmitting an indication to said wireless communication terminal (10) indicating whether said wireless communication network (20) allows said wireless communication terminal (10) to use exclusively automated content which is protected by a digital rights management.

2. Method according to claim 1, wherein said automated content comprises at least one of a ringing tone, a background image, a wallpaper, a skin and a theme.

3. Method according to claim 1 or 2, wherein said indication is a flag.

4. Method according to one of the preceding claims, wherein said indication indicates only for selected types of automated content that said wireless communication network (20) allows said wireless communication terminal (10) to use exclusively automated content which is protected by a digital rights management.

5. Method according to one of the preceding claims, wherein said indication indicates separately for different types of automated content that said wireless communication network (20) allows said wireless communication terminal (10) to use exclusively automated content which is protected by a digital rights management.

6. Method for controlling a use of automated content at a wireless communication terminal (10), which wireless communication terminal (10) is able to access a wireless communication network (20), said method **characterized in that** it comprises, at said wireless communication terminal (10), the steps of:
- receiving from said wireless communication network (20) an indication indicating whether said wireless communication network (20) allows said wireless communication terminal (10) to use exclusively automated content which is protected by a digital rights management; and
- storing said indication in a storage (12) to enable said wireless communication terminal (10) to control a use of automated content according to said indication.

7. Method according to claim 6, wherein said automated content comprises at least one of a ringing tone, a background image, a wallpaper, a skin and a theme.

8. Method according to claim 6 or 7, wherein said received indication comprises a flag.

9. Method according to one of claims 6 to 8, wherein said received indication is stored by setting a flag in said storage (12).

10. Method according to one of claims 6 to 9, wherein said indication indicates for selected types of automated content whether said wireless communication network (20) allows said wireless communication terminal (10) to use exclusively automated content which is protected by a digital rights management.

11. Method according to one of claims 6 to 10, wherein said indication indicates separately for different types of automated content whether said wireless communication network (20) allows said wireless communication terminal (10) to use exclusively automated content which is protected by a digital rights management.

12. Method according to one of claims 6 to 11, further comprising preceding steps of:
- detecting that said wireless communication terminal (10) is newly accessing said wireless communication network (20); and
- storing an indication in said storage (12) indicating that said wireless communication network (20) allows said wireless communication terminal (10) to use any kind of automated content.

13. Method according to one of claims 6 to 12, wherein said storage (12) is protected from unauthorized accesses.

14. Method according to one of claims 6 to 13, further comprising in case a user of said wireless communication terminal (10) selects a content for use as an automated content:
- preventing a use of said content as an automated content, if said content is determined not to be protected by a digital rights management and said indication stored in said storage (12) indicates that said wireless communication network (20) allows said wireless communication terminal (10) to use exclusively automated content which is protected by a digital rights management.

15. Method according to claim 14, further comprising informing a user of said wireless communication terminal (10) in case a requested use of a selected content as an automated content is prevented.

16. Processing module (22) for a network element (21) of a wireless communication network (20), which wireless communication network (20) can be accessed by a wireless communication terminal (10), said professing module (22) **characterized by** being adapted to receive information that a wireless communication terminal (10) is newly accessing said communication network (20) and to cause, in the case of reception of such information, a transmission of an indication to said wireless communication terminal (10) indicating whether said wireless communication network (20) allows said wireless communication terminal (10) to use exclusively automated content which is protected by a digital rights management.

17. Processing module (22) according to claim 16, wherein said automated content comprises at least one of a ringing tone, a background image, a wallpaper, a skin and a theme.

18. Processing module (22) according to claim 16 or 17, which is configured to cause a transmission of said indication in the form of a flag.

19. Processing module (22) according to one of claims 16 to 18, which is configured to cause a transmission of an indication, which indicates only for selected types of automated content that said wireless communication network (20) allows said wireless communication terminal (10) to use exclusively automated content which is protected by a digital rights management.

20. Processing module (22) according to one of claims 16 to 19, which is configured to cause a transmission of an indication, which indicates separately for different types of automated content that said wireless communication network (20) allows said wireless communication terminal (10) to use exclusively automated content which is protected by a digital rights management.

21. Network element (21) for a wireless communication network (20) comprising a processing module (22) according to one of claims 16 to 20.

22. Automated content control software code for controlling a use of automated content at a wireless communication terminal (10), which wireless communication terminal (10) is able to access a wireless communication network (20), said automated content control software code realizing the method according to one of claims 1 to 5 when running in a processing module (22) of a network element (21) of said wireless communication network (10).

23. Software program product storing an automated content control software code according to claim 22.

24. Processing module (18) for a device (10) which is able to access a wireless communication network (20), said processing module (18) **characterized by** being adapted to receive from said wireless communication network (20) an indication indicating whether said wireless communication network (20) allows said device (10) to use exclusively automated content which is protected by a digital rights management, and to store a received indication indicating whether said wireless communication network (20) allows said device (10) to use exclusively automated content which is protected by a digital rights management in a storage (12) of said device (10) to enable said device (10) to control a use of automated content according to said indication.

25. Processing module (18) according to claim 24, wherein said automated content comprises at least one of a ringing tone, a background image, a wallpaper, a skin and a theme.

26. Processing module (18) according to claim 24 or 25, which is configured to receive said indication in the form of a flag.

27. Processing module (18) according to one of claims 24 to 26, which is configured to store a received indication by setting a flag in said storage.

28. Processing module (18) according to claim 24 or 27, which is configured to receive and store an indication, which indicates for selected types of automated content whether said wireless communication network (20) allows said device (10) to use exclusively automated content which is protected by a digital rights management.

29. Processing module (18) according to one of claims 24 to 28, which is configured to receive and store an indication, which indicates separately for different types of automated content whether said wireless communication network (20) allows said device (10) to use exclusively automated content which is protected by a digital rights management.

30. Processing module (18) according to one of claims 24 to 29,
- which is further adapted to detect that said device (10) is newly accessing said wireless communication network (20); and
- which is further adapted to store an indication in said storage indicating that said wireless communication network (20) allows said device (10) to use any kind of automated content.

31. Processing module (18) according to one of claims 24 to 30,
- which is further adapted to receive information that a user of said device (10) selects a content for use as an automated content and to determine whether said content is protected by a digital rights management;
- which is further adapted to retrieve an indication indicating whether said wireless communication network (20) allows said device (10) to use exclusively automated content which is protected by a digital rights management from said storage (12); and
- which is further adapted to prevent using a content selected by a user as an automated content, if said content is determined not to be protected by a digital rights management and an indication retrieved from said storage (12) indicates that said wireless communication network (20) allows said device (10) to use exclusively automated content which is protected by a digital rights management.

32. Processing module (18) according to claim 31, which is further configured to inform a user of said device (10) in case a requested use of a selected content as an automated content is prevented.

33. A device (10) which is able to access a wireless communication network (20), comprising :
a processing module (18) according to one of claims 24 to 32; and
a storage (12) adapted to store an indication indicating whether or not said wireless communication network (20) allows said device (10) to use exclusively automated content which is protected by a digital rights management.

34. A device (10) according to claim 33, further comprising at least one application (16, 17) which is adapted to set a content as an automated content.

35. A device (10) according to claim 34, wherein said storage (12) is arranged to be protected from unauthorized accesses.

36. Digital rights management software code for controlling a use of automated content at a wireless communication terminal (10), which wireless communication terminal (10) is able to access a wireless communication network (20), said automated content control software code realizing the method of one of claims 6 to 15 when running in a processing module (22) of said wireless communication terminal (10).

37. Software program product storing a digital rights management software code according to claim 36.

38. Wireless communication system comprising at least one network element (21) according to claim 21 and at least one device (10) according to one of claims 33 to 35.

## Patentansprüche

1. Verfahren zum Regeln der Benutzung von automatisiertem Inhalt in einem drahtlosen Kommunikationsendgerät (10), wobei das drahtlose Kommunikationsendgerät (10) zum Zugreifen auf ein drahtloses Kommunikationsnetz (20) fähig ist, wobei das Verfahren **dadurch gekennzeichnet ist, dass** es, in dem drahtlosen Kommunikationsnetz (20), folgende Schritte umfasst:
- Erkennen, ob ein drahtloses Kommunikationsendgerät (10) neu auf das drahtlose Kommunikationsnetz (20) zugreift; und
- falls ein derartiger Zugriff erkannt wird, Übertragen einer Anzeige an das drahtlose Kommunikationsendgerät (10), die anzeigt, ob das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

2. Verfahren nach Anspruch 1, wobei der automatisierte Inhalt zumindest eines von einem Klingelton, einem Hintergrundbild, einem Bildschirmhintergrund (Wallpaper), einem Skin und einem Thema umfasst.

3. Verfahren nach einem der Ansprüche 1 oder 2, wobei die Anzeige ein Flag ist.

4. Verfahren nach einem der vorhergehenden Ansprüche, wobei die Anzeige nur für ausgewählte Arten von automatisiertem Inhalt anzeigt, dass das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

5. Verfahren nach einem der vorhergehenden Ansprüche, wobei die Anzeige separat für verschiedene Arten von automatisiertem Inhalt anzeigt, dass das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

6. Verfahren zum Regeln der Benutzung von automatisiertem Inhalt in einem drahtlosen Kommunikationsendgerät (10), wobei das drahtlose Kommunikationsendgerät zum Zugreifen auf ein drahtloses Kommunikationsnetz (20) fähig ist, wobei das Verfahren **dadurch gekennzeichnet ist, dass** es, in dem drahtlosen Kommunikationsendgerät (10), folgende Schritte umfasst:
- Empfangen von dem drahtlosen Kommunikationsnetz (20) einer Anzeige, die anzeigt, ob das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist; und
- Speichern der Anzeige in einem Speicher (12), um es dem drahtlosen Kommunikationsendgerät (10) zu ermöglichen, eine Benutzung von automatisiertem Inhalt gemäß der Anzeige zu regeln.

7. Verfahren nach Anspruch 6, wobei der automatisierte Inhalt zumindest eines von einem Klingelton, einem Hintergrundbild, einem Bildschirmhintergrund (Wallpaper), einem Skin und einem Thema umfasst.

8. Verfahren nach einem der Ansprüche 6 oder 7, wobei die empfangene Anzeige ein Flag umfasst.

9. Verfahren nach einem der Ansprüche 6 bis 8, wobei die empfangene Anzeige durch Setzen eines Flags in dem Speicher (12) gespeichert wird.

10. Verfahren nach einem der Ansprüche 6 bis 9, wobei die Anzeige für ausgewählte Arten von automatisiertem Inhalt anzeigt, ob das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

11. Verfahren nach einem der Ansprüche 6 bis 10, wobei die Anzeige separat für verschiedene Arten von automatisiertem Inhalt anzeigt, ob das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

12. Verfahren nach einem der Ansprüche 6 bis 11, ferner folgende vorhergehenden Schritte umfassend:
- Erkennen, dass das drahtlose Kommunikationsendgerät (10) neu auf das drahtlose Kommunikationsnetz (20) zugreift; und
- Speichern einer Anzeige in dem Speicher (12), die anzeigt, dass das drahtlose Kommunikationsnetz (20) dem drahtlosen Kommunikationsendgerät (10) erlaubt, jegliche Art von automatisiertem Inhalt zu benutzen.

13. Verfahren nach einem der Ansprüche 6 bis 12, wobei der Speicher (12) vor unberechtigten Zugriffen geschützt ist.

14. Verfahren nach einem der Ansprüche 6 bis 13, ferner umfassend, falls ein Benutzer des drahtlosen Kommunikationsendgeräts (10) einen Inhalt zur Benutzung als automatisierten Inhalt auswählt:
- Verhindern einer Benutzung des Inhalts als automatisierten Inhalt, wenn der Inhalt als nicht durch eine digitale Rechteverwaltung geschützt bestimmt wird und die Anzeige, die in dem Speicher (12) gespeichert ist, anzeigt, dass das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

15. Verfahren nach Anspruch 14, ferner umfassend das Informieren eines Benutzers des drahtlosen Kommunikationsendgeräts (10), falls eine angeforderte Benutzung eines ausgewählten Inhalts als automatisierter Inhalt verhindert wird.

16. Verarbeitungsmodul (22) für ein Netzelement (21) eines drahtlosen Kommunikationsnetzes (20), wobei auf das drahtlose Kommunikationsnetz (20) von einem drahtlosen Kommunikationsendgerät (10) zugegriffen werden kann, wobei das Verarbeitungsmodul (22) **dadurch gekennzeichnet ist, dass** es zum Empfangen von Information, dass ein drahtloses Kommunikationsendgerät (10) neu auf das drahtlose Kommunikationsnetz (20) zugreift, und zum Bewirken, im Falle des Empfangs derartiger Information, einer Übertragung einer Anzeige an das drahtlose Kommunikationsendgerät (10), die anzeigt, ob das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist, geeignet ist.

17. Verarbeitungsmodul (22) nach Anspruch 16, wobei der automatisierte Inhalt zumindest eines von einem Klingelton, einem Hintergrundbild, einem Bildschirmhintergrund (Wallpaper), einem Skin und einem Thema umfasst.

18. Verarbeitungsmodul (22) nach einem der Ansprüche 16 oder 17, das zum Bewirken einer Übertragung der Anzeige in Form eines Flags konfiguriert ist.

19. Verarbeitungsmodul (22) nach einem der Ansprüche 16 bis 18, das zum Bewirken einer Übertragung einer Anzeige konfiguriert ist, die nur für ausgewählte Arten von automatisiertem Inhalt anzeigt, dass das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

20. Verarbeitungsmodul (22) nach einem der Ansprüche 16 bis 19, das zum Bewirken einer Übertragung einer Anzeige konfiguriert ist, die separat für verschiedene Arten von automatisiertem Inhalt anzeigt, dass das drahtlose Kommunikationsnetz (20) dem drahtlosen Kommunikationsendgerät (10) erlaubt, ausschließlich automatisierten Inhalt zu benutzen, der durch eine digitale Rechteverwaltung geschützt ist.

21. Netzelement (21) für ein drahtloses Kommunikationsnetz (20), umfassend ein Verarbeitungsmodul (22) nach einem der Ansprüche 16 bis 20.

22. Regelungssoftwarecode für automatisierten Inhalt zum Regeln einer Benutzung von automatisiertem Inhalt in einem drahtlosen Kommunikationsendgerät (10), wobei das drahtlose Kommunikationsendgerät (10) zum Zugreifen auf ein drahtloses Kommunikationsnetz (20) fähig ist, wobei der Regelungssoftwarecode für automatisierten Inhalt das Verfahren nach einem der Ansprüche 1 bis 5 durchführt, wenn er in einem Verarbeitungsmodul (22) eines Netzelements (22) des drahtlosen Kommunikationsnetzes (20) ausgeführt wird.

23. Softwareprogrammprodukt, das einen Regelungssoftwarecode für automatisierten Inhalt nach Anspruch 22 speichert.

24. Verarbeitungsmodul (18) für ein Gerät (10), das fähig ist, auf ein drahtloses Kommunikationsnetz (20) zuzugreifen, wobei das Verarbeitungsmodul (18) **dadurch gekennzeichnet ist, dass** es dazu geeignet ist, eine Anzeige von dem drahtlosen Kommunikationsnetz (20) zu empfangen, die anzeigt, ob das drahtlose Kommunikationsnetz (20) dem Gerät (10) erlaubt, ausschließlich automatisierten Inhalt zu benutzen, der durch eine digitale Rechteverwaltung geschützt ist, und eine empfangene Anzeige, die anzeigt, ob das drahtlose Kommunikationsnetz (20) dem Gerät (10) erlaubt, ausschließlich automatisierten Inhalt zu benutzen, der durch eine digitale Rechteverwaltung geschützt ist, in einem Speicher (12) des Geräts (10) zu speichern, um es dem Gerät (10) zu ermöglichen, eine Benutzung von automatisiertem Inhalt gemäß der Anzeige zu regeln.

25. Verarbeitungsmodul (18) nach Anspruch 24, wobei der automatisierte Inhalt zumindest eines von einem Klingelton, einem Hintergrundbild, einem Bildschirmhintergrund (Wallpaper), einem Skin und einem Thema umfasst.

26. Verarbeitungsmodul (18) nach einem der Ansprüche 24 oder 25, das zum Empfangen der Anzeige in Form eines Flags konfiguriert ist.

27. Verarbeitungsmodul (18) nach einem der Ansprüche 24 bis 16, das zum Speichern einer empfangenen Anzeige durch Setzen eines Flags in dem Speicher konfiguriert ist.

28. Verarbeitungsmodul (18) nach einem der Ansprüche 24 oder 27, das zum Empfangen und Speichern einer Anzeige konfiguriert ist, die für ausgewählte Arten von automatisiertem Inhalt anzeigt, ob das drahtlose Kommunikationsnetz (20) dem Gerät (10) erlaubt, ausschließlich automatisierten Inhalt zu benutzen, der durch eine digitale Rechteverwaltung geschützt ist.

29. Verarbeitungsmodul (18) nach einem der Ansprüche 24 bis 28, das zum Empfangen und Speichern einer Anzeige konfiguriert ist, die separat für verschiedene Arten von automatisiertem Inhalt anzeigt, ob das drahtlose Kommunikationsnetz (20) dem Gerät (10) erlaubt, ausschließlich automatisierten Inhalt zu benutzen, der durch eine digitale Rechteverwaltung geschützt ist.

30. Verarbeitungsmodul (18) nach einem der Ansprüche 24 bis 29,
- das ferner dazu geeignet ist zu erkennen, dass das Gerät (10) neu auf das drahtlose Kommunikationsnetz (20) zugreift; und
- das ferner dazu geeignet ist, eine Anzeige in dem Speicher zu speichern, die anzeigt, dass das drahtlose Kommunikationsnetz (20) dem Gerät (10) erlaubt, jegliche Art von automatisiertem Inhalt zu benutzen.

31. Verarbeitungsmodul (18) nach einem der Ansprüche 24 bis 30,
- das ferner dazu geeignet ist, Information zu empfangen, dass ein Benutzer des Geräts (10) einen Inhalt zur Benutzung als automatisierten Inhalt auswählt, und zu bestimmen, ob der Inhalt durch eine digitale Rechteverwaltung geschützt ist;
- das ferner dazu geeignet ist, aus dem Speicher (12) eine Anzeige abzurufen, die anzeigt, ob das drahtlose Kommunikationsnetz (20) dem Gerät (10) erlaubt, ausschließlich automatisierten Inhalt, der durch eine digitale Rechteverwaltung geschützt ist, zu benutzen; und
- das ferner dazu geeignet ist, das Benutzen eines Inhalts, der vom Benutzer ausgewählt wurde als automatisierter Inhalt, zu verhindern, wenn der Inhalt als nicht durch eine digitale Rechteverwaltung geschützt bestimmt wurde und eine Anzeige, die von dem Speicher (12) abgerufen wurde, anzeigt, dass das drahtlose Kommunikationsnetz (20) dem Gerät (10) erlaubt, ausschließlich automatisierten Inhalt zu benutzen, der durch eine digitale Rechteverwaltung geschützt ist.

32. Verarbeitungsmodul (18) nach Anspruch 31, das ferner zum Informieren eines Benutzers des Geräts (10) konfiguriert ist, falls eine angeforderte Benutzung eines ausgewählten Inhalts als automatisierter Inhalt verhindert wird.

33. Gerät (10), das zum Zugreifen auf ein drahtloses Kommunikationsnetz (20) fähig ist, umfassend:
ein Verarbeitungsmodul (18) nach einem der Ansprüche 24 bis 32; und
einen Speicher (12), der zum Speichern einer Anzeige geeignet ist, die anzeigt, ob das drahtlose Kommunikationsnetz (20) dem Gerät (10) erlaubt, ausschließlich automatisierten Inhalt zu benutzen, der durch eine digitale Rechteverwaltung geschützt ist, oder nicht.

34. Gerät (10) nach Anspruch 33, ferner umfassend zumindest eine Anwendung (16, 17), die dazu geeignet ist, einen Inhalt als automatisierten Inhalt einzustellen.

35. Gerät nach Anspruch 34, wobei der Speicher (12) vor unberechtigten Zugriffen geschützt angeordnet ist.

36. Softwarecode für digitale Rechteverwaltung zum Regeln einer Benutzung von automatisiertem Inhalt in einem drahtlosen Kommunikationsendgerät (10), wobei das drahtlose Kommunikationsendgerät (10) zum Zugreifen auf ein drahtloses Kommunikationsnetz (20) fähig ist, und wobei der Softwarecode für digitale Rechteverwaltung das Verfahren nach einem der Ansprüche 6 bis 15 durchführt, wenn er in einem Verarbeitungsmodul (22) des drahtlosen Kommunikationsendgeräts (10) ausgeführt wird.

37. Softwareprogrammprodukt, das einen Softwarecode für digitale Rechteverwaltung nach Anspruch 36 speichert.

38. Drahtloses Kommunikationssystem, umfassend zumindest ein Netzelement (21) nach Anspruch 21 und zumindest ein Gerät (10) nach einem der Ansprüche 33 bis 35.

## Revendications

1. Procédé pour contrôler l'utilisation d'un contenu automatisé au niveau d'un terminal de communication sans fil (10), lequel terminal de communication sans fil (10) est apte à accéder à un réseau de communication sans fil (20), ledit procédé étant **caractérisé en ce qu'**il comporte, au niveau dudit réseau de communication sans fil (20), les étapes ci-dessous consistant à :
- détecter si un terminal de communication sans fil (10) accède à nouveau audit réseau de communication sans fil (20) ; et
- au cas où un tel accès est détecté, transmettre une indication audit terminal de communication sans fil (10) indiquant si oui ou non ledit réseau de communication sans fil (20) autorise ledit terminal de communication sans fil (10) à utiliser exclusivement un contenu automatisé qui est protégé par une gestion des droits numériques.

2. Procédé selon la revendication 1, dans lequel ledit contenu automatisé comporte au moins un élément parmi une sonnerie, une image d'arrière-plan, un papier peint, un habillage d'interface et un thème.

3. Procédé selon la revendication 1 ou 2, dans lequel ladite indication est un fanion.

4. Procédé selon l'une quelconque des revendications précédentes, dans lequel ladite indication indique uniquement pour des types sélectionnés d'un contenu automatisé que ledit réseau de communication sans fil (20) autorise ledit terminal de communication sans fil (10) à utiliser exclusivement un contenu automatisé qui est protégé par une gestion des droits numériques.

5. Procédé selon l'une quelconque des revendications précédentes, dans lequel ladite indication indique séparément pour différents types d'un contenu automatisé que ledit réseau de communication sans fil (20) autorise ledit terminal de communication sans fil (10) à utiliser exclusivement un contenu automatisé qui est protégé par une gestion des droits numériques.

6. Procédé pour contrôler l'utilisation d'un contenu automatisé au niveau d'un terminal de communication sans fil (10), lequel terminal de communication sans fil (10) est apte à accéder à un réseau de communication sans fil (20), ledit procédé étant **caractérisé en ce qu'**il comporte, au niveau dudit terminal de communication sans fil (10), les étapes ci-dessous consistant à :
- recevoir dudit réseau de communication sans fil (20) une indication indiquant si oui ou non ledit réseau de communication sans fil (20) autorise ledit terminal de communication sans fil (10) à utiliser exclusivement un contenu automatisé qui est protégé par une gestion des droits numériques ; et
- stocker ladite indication dans une mémoire de stockage (12) pour autoriser ledit terminal de communication sans fil (10) à contrôler l'utilisation d'un contenu automatisé selon ladite indication.

7. Procédé selon la revendication 6, dans lequel ledit contenu automatisé comporte au moins un élément parmi une sonnerie, une image d'arrière-plan, un papier peint, un habillage d'interface et un thème.

8. Procédé selon la revendication 6 ou 7, dans lequel ladite indication reçue comporte un fanion.

9. Procédé selon l'une quelconque des revendications 6 à 8, dans lequel ladite indication est stockée en définissant un fanion dans ladite mémoire de stockage (12).

10. Procédé selon l'une quelconque des revendications 6 à 9, dans lequel ladite indication indique pour des types sélectionnés d'un contenu automatisé si oui ou non ledit réseau de communication sans fil (20) autorise ledit terminal de communication sans fil (10) à utiliser exclusivement un contenu automatisé qui est protégé par une gestion des droits numériques.

11. Procédé selon l'une quelconque des revendications 6 à 10, dans lequel ladite indication indique séparément pour différents types d'un contenu automatisé si oui ou non ledit réseau de communication sans fil (20) autorise ledit terminal de communication sans fil (10) à utiliser exclusivement un contenu automatisé qui est protégé par une gestion des droits numériques.

12. Procédé selon l'une quelconque des revendications 6 à 11, comportant en outre les étapes précédentes consistant à :
- détecter que ledit terminal de communication sans fil (10) accède à nouveau audit réseau de communication sans fil (20) ; et
- stocker une indication dans ladite mémoire de stockage (12) indiquant que ledit réseau de communication sans fil (20) autorise ledit terminal de communication sans fil (10) à utiliser un quelconque type de contenu automatisé.

13. Procédé selon l'une quelconque des revendications 6 à 12, dans lequel ladite mémoire de stockage (12) est protégée contre les accès non autorisés.

14. Procédé selon l'une quelconque des revendications 6 à 13, comportant en outre, au cas où un utilisateur dudit terminal de communication sans fil (10) sélectionne un contenu destiné à être utilisé en tant qu'un contenu automatisé, les étapes consistant à :
- empêcher l'utilisation dudit contenu en tant qu'un contenu automatisé, lorsque ledit contenu est déterminé en tant que non protégé par une gestion des droits numériques et ladite indication stockée dans ladite mémoire de stockage (12) indique que ledit réseau de communication sans fil (20) autorise ledit terminal de communication sans fil (10) à utiliser exclusivement un contenu automatisé qui est protégé par une gestion des droits numériques.

15. Procédé selon la revendication 14, comportant en outre l'étape consistant à informer un utilisateur dudit terminal de communication sans fil (10) au cas où une utilisation requise d'un contenu sélectionné en tant qu'un contenu automatisé est empêchée.

16. Module de traitement (22) pour un élément de réseau (21) d'un réseau de communication sans fil (20), lequel réseau de communication sans fil (20) peut être accédé par un terminal de communication sans fil (10), ledit module de traitement (22) étant **caractérisé en ce qu'**il est apte à recevoir des informations indiquant qu'un terminal de communication sans fil (10) accède à nouveau audit réseau de communication (20) et à occasionner, en cas de réception desdites informations, une transmission d'une indication audit terminal de communication sans fil (10) indiquant si oui ou non ledit réseau de communication sans fil (20) autorise ledit terminal de communication sans fil (10) à utiliser exclusivement un contenu automatisé qui est protégé par une gestion des droits numériques.

17. Module de traitement (22) selon la revendication 16, dans lequel ledit contenu automatisé comporte au moins un élément parmi une sonnerie, une image d'arrière-plan, un papier peint, un habillage d'interface et un thème.

18. Module de traitement (22) selon la revendication 16 ou 17, lequel est configuré pour occasionner une transmission de ladite indication sous la forme d'un fanion.

19. Module de traitement (22) selon l'une quelconque des revendications 16 à 18, lequel est configuré pour occasionner une transmission d'une indication, laquelle indique, uniquement pour des types sélectionnés d'un contenu automatisé, que ledit réseau de communication sans fil (20) autorise ledit terminal de communication sans fil (10) à utiliser exclusivement un contenu automatisé qui est protégé par une gestion des droits numériques.

20. Module de traitement (22) selon l'une quelconque des revendications 16 à 19, lequel est configuré pour occasionner une transmission d'une indication, laquelle indique séparément pour différents types d'un contenu automatisé, que ledit réseau de communication sans fil (20) autorise ledit terminal de communication sans fil (10) à utiliser exclusivement un contenu automatisé qui est protégé par une gestion des droits numériques.

21. Élément de réseau (21) pour un réseau de communication sans fil (20) comportant un module de traitement (22) selon l'une quelconque des revendications 16 à 20.

22. Code de logiciel de contrôle de contenu automatisé pour contrôler l'utilisation d'un contenu automatisé au niveau d'un terminal de communication sans fil (10), lequel terminal de communication sans fil (10) est apte à accéder à un réseau de communication sans fil (20), ledit code de logiciel de contrôle de contenu automatisé mettant en oeuvre le procédé selon l'une quelconque des revendications 1 à 5, lorsqu'il est exécuté dans un module de traitement (22) d'un élément de réseau (21) dudit réseau de communication sans fil (10).

23. Produit programme logiciel stockant un code de logiciel de contrôle de contenu automatisé selon la revendication 22.

24. Module de traitement (18) pour un dispositif (10) qui est apte à accéder à un réseau de communication sans fil (20), ledit module de traitement (18) étant **caractérisé en ce qu'**il est apte à recevoir dudit réseau de communication sans fil (20) une indication indiquant si ledit réseau de communication sans fil (20) autorise ledit dispositif (10) à utiliser exclusivement un contenu automatisé qui est protégé par une gestion des droits numériques, et à stocker une indication reçue indiquant si oui ou non ledit réseau de communication sans fil (20) autorise ledit dispositif (10) à utiliser exclusivement un contenu automatisé qui est protégé par une gestion des droits numériques dans une mémoire de stockage (12) dudit dispositif (10) pour autoriser ledit dispositif (10) à contrôler l'utilisation d'un contenu automatisé selon ladite indication.

25. Module de traitement (18) selon la revendication 24, dans lequel ledit contenu automatisé comporte au moins un élément parmi une sonnerie, une image d'arrière-plan, un papier peint, un habillage d'interface et un thème.

26. Module de traitement (18) selon la revendication 24 ou 25, lequel est configuré pour recevoir ladite indication sous la forme d'un fanion.

27. Module de traitement (18) selon l'une quelconque des revendications 24 à 26, lequel est configuré pour stocker une indication reçue en définissant un fanion dans ladite mémoire de stockage.

28. Module de traitement (18) selon la revendication 24 ou 27, lequel est configuré pour recevoir et pour stocker une indication, laquelle indique, pour des types sélectionnés d'un contenu automatisé, si oui ou non ledit réseau de communication sans fil (20) autorise ledit dispositif (10) à utiliser exclusivement un contenu automatisé qui est protégé par une gestion des droits numériques.

29. Module de traitement (18) selon l'une quelconque des revendications 24 à 28, lequel est configuré pour recevoir et pour stocker une indication, laquelle indique, séparément pour différents types d'un contenu automatisé, si oui ou non ledit réseau de communication sans fil (20) autorise ledit dispositif (10) à utiliser exclusivement un contenu automatisé qui est protégé par une gestion des droits numériques.

30. Module de traitement (18) selon l'une quelconque des revendications 24 à 29,
- lequel est en outre apte à détecter que ledit dispositif (10) accède à nouveau audit réseau de communication sans fil (20) ; et
- lequel est en outre apte à stocker une indication dans ladite mémoire de stockage indiquant que ledit réseau de communication sans fil (20) autorise ledit dispositif (10) à utiliser un quelconque type de contenu automatisé.

31. Module de traitement (18) selon l'une quelconque des revendications 24 à 30,
- lequel est en outre apte à recevoir des informations indiquant qu'un utilisateur dudit dispositif (10) sélectionne un contenu destiné à être utilisé en tant qu'un contenu automatisé et à déterminer si oui ou non ledit contenu est protégé par une gestion des droits numériques;
- lequel est en outre apte à récupérer une indication indiquant si oui ou non ledit réseau de communication sans fil (20) autorise ledit dispositif (10) à utiliser exclusivement un contenu automatisé qui est protégé par une gestion des droits numériques à partir de ladite mémoire de stockage (12) ; et
- lequel est en outre apte à empêcher l'utilisation d'un contenu sélectionné par un utilisateur en tant qu'un contenu automatisé, lorsque ledit contenu est déterminé comme n'étant pas protégé par une gestion des droits numériques et une indication récupérée à partir de ladite mémoire de stockage (12) indique que ledit réseau de communication sans fil (20) autorise ledit dispositif (10) à utiliser exclusivement un contenu automatisé qui est protégé par une gestion des droits numériques.

32. Module de traitement (18) selon la revendication 31, lequel est en outre configuré pour informer un utilisateur dudit dispositif (10) au cas où une utilisation requise, d'un contenu sélectionné en tant qu'un contenu automatisé, est empêchée.

33. Dispositif (10) qui est apte à accéder à un réseau de communication sans fil (20), comportant :
- un module de traitement (18) selon l'une quelconque des revendications 24 à 32 ; et
- une mémoire de stockage (12) apte à stocker une indication indiquant si oui ou non ledit réseau de communication sans fil (20) autorise ledit dispositif (10) à utiliser exclusivement un contenu automatisé qui est protégé par une gestion des droits numériques

34. Dispositif (10) selon la revendication 33, comportant en outre au moins une application (16, 17) qui est apte à définir un contenu en tant qu'un contenu automatisé.

35. Dispositif (10) selon la revendication 34, dans lequel ladite mémoire de stockage (12) est agencée de façon à être protégée contre des accès non autorisés.

36. Code de logiciel de gestion des droits numériques pour contrôler l'utilisation d'un contenu automatisé au niveau d'un terminal de communication sans fil (10), lequel terminal de communication sans fil (10) est apte à accéder à un réseau de communication sans fil (20), ledit code de logiciel de contrôle de contenu automatisé mettant en oeuvre le procédé selon l'une quelconque des revendications 6 à 15 lorsqu'il est exécuté dans un module de traitement (22) dudit terminal de communication sans fil (10).

37. Produit programme logiciel stockant un code de logiciel de gestion des droits numériques selon la revendication 36.

38. Système de communication sans fil comportant au moins un élément de réseau (21) selon la revendication 21 et au moins un dispositif (10) selon l'une quelconque des revendications 33 à 35.
